(19) Europäisches Patentamt
European Patent Office
Office européen des brevets

(11) **EP 3 351 612 A1**

(12) **EUROPEAN PATENT APPLICATION**

(43) Date of publication:
**25.07.2018 Bulletin 2018/30**

(21) Application number: **17152777.3**

(22) Date of filing: **24.01.2017**

(51) Int Cl.:
***C11D 1/72*** *(2006.01)*
***B08B 3/08*** *(2006.01)*
***B08B 9/08*** *(2006.01)*
***C08F 2/00*** *(2006.01)*
***C11D 11/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BASF SE**
**67056 Ludwigshafen am Rhein (DE)**

(72) Inventors:
- **Weiss, Thomas**
  **67056 Ludwigshafen (DE)**
- **Rittig, Frank**
  **67056 Ludwigshafen (DE)**
- **Geyer, Karolin**
  **67056 Ludwigshafen (DE)**
- **Kashani, Nawid**
  **67056 Ludwigshafen (DE)**

(74) Representative: **BASF IP Association**
**BASF SE**
**G-FLP-C006**
**67056 Ludwigshafen (DE)**

# (54) METHOD FOR CLEANING A REACTOR

(57) The presently claimed invention is directed to a method for cleaning a polymerization reactor, used for preparing polyalkylene glycol, by means of a non-ionic surfactant solution.

EP 3 351 612 A1

## Description

The presently claimed invention is directed to a method for cleaning a polymerization reactor, used for preparing polyalkylene glycol, by means of a non-ionic surfactant solution.

## Background of the invention

Lubricants, especially polyalkylene glycol (PAG) based lubricants, are being extensively used for wide variety of industrial applications, such as, compressor oils, hydraulic fluids, metal working lubricants and gearbox oils. These lubricants possess good characteristics such as high viscosity index, low pour point, high shear stability, high thermal stability and high resistance to oxidation. Breox® and Ucon™ are some of the polyalkylene glycol based lubricants currently available in the market.

Polyalkylene glycols are alkoxylation products and require an alkoxylation reactor for their production. Due to the high viscosity of polymeric products in comparison to other reaction products, efficient reactor cleaning is a concern. The polyalkylene glycols may scale on the interior surface or deposit at the bottom of the reactor, thereby making it difficult to clean the reactor. Consequently, several methods have been proposed for removing the scales and other materials deposited on the reactor surface. Conventional methods include mechanical and chemical cleaning. Vibrational cleaning as well as cleaning by means of high pressure jet are classified under mechanical cleaning methods.

Chemical cleaning methods make use of chemical(s) or their composition in a suitable solvent to clean the reactor. Alkali cleaning, acid cleaning or emulsion cleaning methods can be employed for cleaning the reactor. Application of a particular cleaning technique depends on the nature of impurity and efficiency of cleaning desired. However, since a polymerization reactor requires cleaning of the high molecular weight polymerization residue along with several other impurities, it becomes a challenging task to suggest such a composition.

Emulsion cleaning methods which make use of surfactant(s) or their composition are generally preferred for cleaning polymerization reactors. A wide variety of surfactants are commercially available and are classified on the basis of polar head groups as anionic, cationic, non-ionic and zwitterionic.

US 4,904,309 discloses one such chemical method for cleaning interior surface of a polymerization reactor. The method makes use of an alkali agent of one or more types of sodium and potassium compounds and one or more surfactants. Such surfactants may be an anionic surfactant or a non-ionic surfactant such as polyoxyethylene alkyl ether or an ampholytic surfactant. Optionally a scale deposition preventing agent might be applied on the interior surface of the reactor.

Another method for cleaning a polymerization or oligomerization reactor and its equipment is disclosed in WO 2012/072178. The method disclosed herein specifically cleans the reactor used in oligomerization or polymerization of ethylene and/or alpha olefin. The method is carried out in presence of supercritical ethylene along with temperature ranging between 150-250°C, pressure between 5.8-6.5 MPa and a residence time of 0.5-2.5 h.

US 4,345,949 discloses a process for cleaning a polymerization vessel contaminated with carboxyl-containing polymers by means of an aqueous solution of non-ionic surfactant such as a polyether and aluminum acetate. The process disclosed herein requires heating the aqueous solution mixed inside polymerization vessel for periods of about 36 to 72 h.

These methods, however, are not satisfactory in several aspects such as requirement of high downtime and residence time for cleaning the reactor. High foaming and emulsion stability of surfactants are another shortcoming associated with these methods. These hinder the cleaning operation, thereby leading to an inefficient cleaning. Requirement of high temperature and high amounts of cleaning chemicals further makes these methods uneconomical.

Thus, it was an objective of the presently claimed invention to provide an economic and efficient method for cleaning a polymerization reactor, used for preparing polyalkylene glycols, that allows for using low amounts of expensive cleaning chemicals at moderate temperatures, while at the same time significantly reducing downtime for cleaning.

## Summary of the invention

Surprisingly, it has been found that solutions comprising a non-ionic surfactant, in particular alkoxylated, unbranched fatty alcohols, are capable of efficiently and economically cleaning the reactor used for preparing polyalkylene glycols so that only low amounts of expensive cleaning chemicals at moderate temperatures, i.e. ≤ 100°C, have to be used while at the same time downtime for cleaning can be significantly reduced.

Hence, in one embodiment, the presently claimed invention is directed to a method for cleaning a reactor comprising a reaction chamber and an interior surface used for preparing a compound of general formula (I)

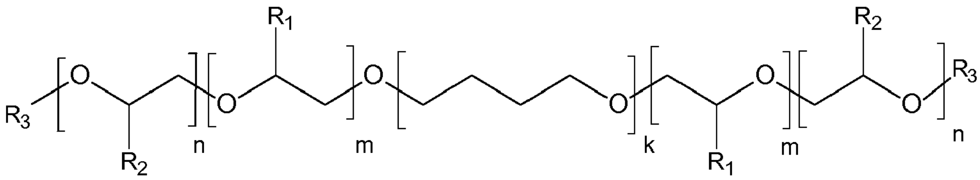

(I),

wherein

- m is, identical or different, a real number in the range of ≥ 1 to ≤ 40,
- n is, identical or different, a real number in the range of ≥ 5 to ≤ 50,
- k is, identical or different, a real number in the range of ≥ 5 to ≤ 30,
- $R_1$ denotes identical or different, substituted or unsubstituted, linear or branched, alkyl radical having 6 to 28 carbon atoms, and
- $R_2$ denotes, identical or different, substituted or unsubstituted alkyl radical having 1 to 5 carbon atoms or hydrogen, and
- $R_3$ denotes, identical or different, hydrogen or substituted or unsubstituted alkyl having 1 to 5 carbon atoms,

whereby the concatenations denoted by k, m and n are distributed to form a block polymeric structure or a random polymeric structure,
the said method comprising at least the steps of:

c) contacting the interior surface with a solution comprising ≥ 1 % to ≤ 5% by weight of a non-ionic surfactant of general formula (II)

$$R_4\text{-O-(AO)}_p\text{-(H)} \qquad \text{(II)},$$

wherein

- p is a real number in the range of ≥ 1 to ≤ 50,
- $R_4$ denotes, identical or different, substituted or unsubstituted, linear or branched alkyl having 4 to 20 carbon atoms,
- and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure,
and a pre-heated solvent,
to obtain a mixture comprising the non-ionic surfactant of general formula (II), the compound of general formula (I) and the solvent,
wherein the pre-heated solvent is at a temperature in the range of ≥ 30°C to ≤ 100°C.

In another embodiment of the presently claimed invention, the above method further comprises the steps of:

a) providing the reactor comprising the compound of general formula (I),
b) discharging the compound of general formula (I) from the reactor and purging with at least one gas selected from the group consisting of nitrogen, argon and helium,
d) stirring the mixture obtained in step c) to give a spent mixture comprising the non-ionic surfactant of general formula (II), the compound of general formula (I) and the solvent,
e) discharging the spent mixture from the reactor.

Thus, in another embodiment the presently claimed invention is directed to a method for cleaning a reactor comprising a reaction chamber and an interior surface used for preparing a compound of general formula (I)

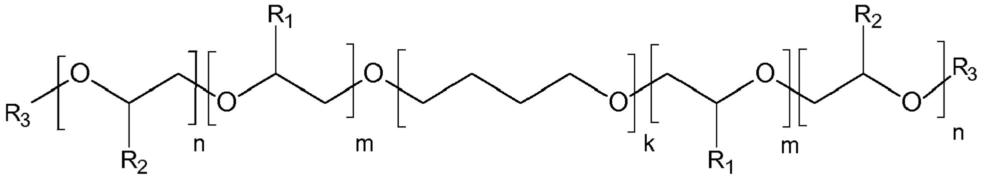

(I),

wherein

- m is, identical or different, a real number in the range of ≥ 1 to ≤ 40,
- n is, identical or different, a real number in the range of ≥ 5 to ≤ 50,
- k is, identical or different, a real number in the range of ≥ 5 to ≤ 30,
- $R_1$ denotes identical or different, substituted or unsubstituted, linear or branched, alkyl radical having 6 to 28 carbon atoms, and
- $R_2$ denotes, identical or different, substituted or unsubstituted alkyl radical having 1 to 5 carbon atoms or hydrogen, and
- $R_3$ denotes, identical or different, hydrogen or substituted or unsubstituted alkyl having 1 to 5 carbon atoms,

whereby the concatenations denoted by k, m and n are distributed to form a block polymeric structure or a random polymeric structure,
comprising the steps of:

a) providing the reactor comprising the compound of general formula (I),
b) discharging the compound of general formula (I) from the reactor and purging with at least one gas selected from the group consisting of nitrogen, argon and helium,
c) contacting the interior surface with a solution comprising ≥ 1 % to ≤ 5% by weight of a non-ionic surfactant of general formula (II)

$$R_4\text{-O-(AO)}_p\text{-(H)} \qquad \text{(II)},$$

wherein

- p is a real number in the range of ≥ 1 to ≤ 50,
- $R_4$ denotes, identical or different, substituted or unsubstituted, linear or branched alkyl having 4 to 20 carbon atoms,
- and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure,
and a pre-heated solvent, wherein the pre-heated solvent is at a temperature in the range of ≥ 30°C to ≤ 100°C, to obtain a mixture comprising the non-ionic surfactant of general formula (II), the compound of general formula (I) and the solvent,
d) stirring the mixture obtained in step c) to give a spent mixture comprising the non-ionic surfactant, the compound of general formula (I) and the solvent, and
e) discharging the spent mixture from the reactor.

In another embodiment of the presently claimed invention, the above method is characterized in that the reactor is an oligomerization reactor or polymerization reactor.

In another embodiment of the presently claimed invention, the above method is characterized in that the compound of general formula (I) has a weight average molecular weight $M_w$ in the range of 1,000 to 20,000 g/mol determined according to DIN 55672-1.

In another embodiment of the presently claimed invention, the above method is characterized in that the non-ionic surfactant (II) has a general formula (III)

$$R_4\text{-O-(EO)}_x\text{-(PO)}_y\text{-(H)} \qquad \text{(III)},$$

wherein

x is a real number in the range of ≥ 1 to ≤ 10,
y is a real number in the range of ≥ 1 to ≤ 10,
EO is $CH_2$-$CH_2$-O,
PO is $CH(CH_3)$-$CH_2$-O or $CH_2$-$CH(CH_3)$-O, and
$R_4$ denotes an unsubstituted, linear or branched alkyl having 8 to 16 carbon atoms,

whereby the concatenations denoted by x and y are distributed to form a block polymeric structure or a random polymeric structure.

In another embodiment of the presently claimed invention, the above method is characterized in that the solvent is selected from a group consisting of water, alcohol, ether and caustic.

In another embodiment of the presently claimed invention, the above method is characterized in that the solvent is water.

In another embodiment of the presently claimed invention, the above method is characterized in that the solution comprises ≥ 1 % to ≤ 5% by weight of a non-ionic surfactant of general formula (II) or general formula (III).

In another embodiment of the presently claimed invention, the above method is characterized in that the solution of step c) is provided with a mean residence time in the range of 0.5 h to 10 h in the reactor.

In another embodiment of the presently claimed invention, the above method is characterized in that temperature in step d) is in the range of ≥ 60°C to ≤ 90°C.

In another embodiment of the presently claimed invention, the above method is characterized in that the stirring in step d) is carried out at ≥ 80 rpm to ≤ 150 rpm.

In another embodiment of the presently claimed invention, the above method is characterized in that the steps c) to step e) are repeated until the difference between the total organic carbon (TOC) of the spent mixture and the total organic carbon (TOC) blank value of the non-ionic surfactant solution is in the range of ≥ 0% to ≤ 35%.

**Detailed Description of Invention**

The term "reactor", as used above in the presently claimed invention, is not only related to the reaction vessel as such, but encompasses all equipments connected to the reaction vessel, such as pipes, supply vessels, distillation columns and the like. The term "equipment" is to be understood to comprise any necessary equipment besides the reactor, such as pipes and valves. A person skilled in the art is therefore aware of the necessary equipments which are included in the term "reactor". The present invention is not limited to any particular reactor. The inventive method may be applied to all chemical reactors wherein the ingredients are deposited and/or agglomerated. Any suitable reactor may be used for this purpose, such as but not limited to, batch, slurry, gas-phase, solution, high pressure, tubular or autoclave reactors, or any combination thereof.

In an embodiment of the present invention, the reactor is an oligomerization or polymerization reactor. In oligomerization, polymer residues are inherently formed as side-products which may form deposits in the reactor and/or equipment. In the polymerization process, the product as such (polymer) can form respective deposits. In both, oligomerization and polymerization process, reactor and/or equipment have to be cleaned to avoid plugging thereof.

The method is preferably applied directly after the regular oligomerization/polymerization cycle is finished in the reactor. The reactor may comprise of a reaction chamber and an interior surface. The reaction chamber and interior surface may be, but not limited to, a cylindrical surface. The polymerization reaction occurs in the interior surface, which comprises of an agitator and baffle. As several polymerization reactions may occur over a wide range of temperatures, means for efficiently heating or cooling the reactor may also be provided on the outer walls of the reaction chamber. Such means of cooling or heating may be, such as but not limited to, a jacket of water, coiled heating or steam heating.

Since, polymerization reaction products are generally high molecular weight, the reactors are provided with agitation means. The agitation means provides ample mixing to the polymer solution which leads to better heat and mass distribution. Such means may be, but not limited to, a stirrer or a mixer. A stirrer is generally attached to the upper surface of the reaction chamber and is suspended freely in the interior surface. The stirrers are fitted with a plurality of blades at the suspended end inside the interior surface. Typically, stirrers are defined by the number of blades attached to them. A typical agitator may comprise of a number of blades such as, but not limited to, three or four or six blades, depending on the level of mixing desired. Moreover, the type and orientation of a particular blade depends on several factors, which are dependent on the nature of products and reactants.

Additionally, the reactor may also be provided with a number of baffles attached to the interior surface of the reactor. The baffles provide for the required turbulence in terms of mass and heat dissipation in the reactor chamber.

However, owing to the high molecular weight and viscosity of the reaction products and the unreacted products, the material gets accumulated on the inside of the reaction chamber and the interior surface. Such accumulations may lead to inefficient performance of the reactor and may adversely affect the product formation when used for a long period of time without cleaning.

The reactor, as defined hereinabove, is used for preparing the compound of general formula (I)

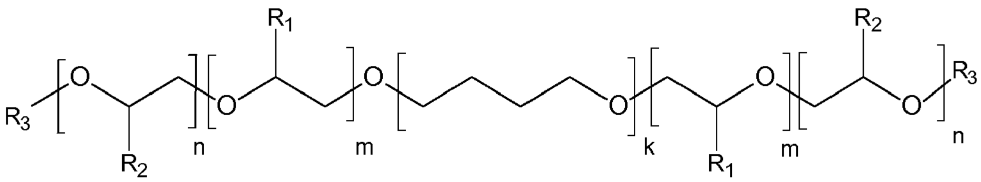

(I),

wherein

- m is, identical or different, a real number in the range of ≥ 1 to ≤ 40,
- n is, identical or different, a real number in the range of ≥ 5 to ≤ 50,
- k is, identical or different, a real number in the range of ≥ 5 to ≤ 30,
- $R_1$ denotes identical or different, substituted or unsubstituted, linear or branched, alkyl radical having 6 to 28 carbon atoms,
- $R_2$ denotes, identical or different, substituted or unsubstituted alkyl radical having 1 to 5 carbon atoms or hydrogen, and
- $R_3$ denotes, identical or different, hydrogen or substituted or unsubstituted alkyl having 1 to 5 carbon atoms,

whereby the concatenations denoted by k, m and n are distributed to form a block polymeric structure or a random polymeric structure,

Compounds of general formula (I) are polyalkylene glycol based compounds, their preparation is described in WO 2014/184062 A1 and WO 2014/139935 A1. Accordingly, the skilled person will be familiar with the general procedures for preparing this class of compounds.

The above formula gives a general definition of the polyalkylene glycols. These substances are mixtures of substances of the type indicated having different chain lengths. For the indices, therefore, average values are calculated which may differ from an integer. Hence, the indices have been kept as real numbers, which take into account such possibilities.

Preferably the at least one $C_8$-$C_{30}$ epoxy alkane is selected from the group consisting of 1,2-epoxyoctane; 1,2-epoxynonane; 1,2-epoxydecane; 1,2-epoxyundecane; 1,2-epoxydodecane; 1,2-epoxytridecane; 1,2-epoxytetradecane; 1,2-epoxypentadecane; 1,2-epoxyhexadecane; 1,2-epoxyheptadecane; 1,2-epoxyoctadecane; 1,2-epoxynonadecane; 1,2-epoxyicosane; 1,2-epoxyunicosane; 1,2-epoxydocosane; 1,2-epoxytricosane; 1,2-epoxytetracosane; 1,2-epoxypentacosane; 1,2-epoxyhexacosane; 1,2-epoxyheptacosane; 1,2-epoxyoctacosane; 1,2-epoxynonacosane and 1,2-epoxytriacontane.

Preferably the at least one catalyst is a base or a double metal cyanide catalyst (DMC catalyst). More preferably the at least one catalyst is selected from the group consisting of alkaline earth metal hydroxides such as calcium hydroxide, strontium hydroxide and barium hydroxide, alkali metal hydroxides such as lithium hydroxide, sodium hydroxide, potassium hydroxide, rubidium hydroxide and caesium hydroxide and alkali metal alkoxylates such as potassium tert-butoxylate.

In case the catalyst is a base, any inert solvents capable of dissolving polytetrahydrofurane may be used as solvents during the reaction or as solvents required for working up the reaction mixture in cases where the reaction is carried out without solvents. The following solvents are mentioned as examples: methylene chloride, trichloroethylene, tetrahydrofuran, dioxane, methyl ethyl ketone, methylisobutyl ketone, ethyl acetate and isobutyl acetate.

In case the catalyst is a base, the amount of catalysts used is preferably in the range from 0.01 to 1.0, based on the total amount of the alkoxylated polytetrahydrofurane. The reaction is preferably carried out at a temperature in the range of 70 to 200° C, the pressure is preferably in the range from 1 bar to 150 bar.

The alkoxylated polytetrahydrofurane may also be obtained from DMC catalysts. The DMC catalysts are usually prepared as a solid and used as such. The catalyst is typically used as powder or in suspension. However, other ways known to those skilled in the art for using catalysts can likewise be employed. The DMC catalyst can be dispersed with an inert or non-inert suspension medium which can be, for example, the product to be produced or an intermediate by suitable measures, e.g. milling. The suspension produced in this way is used, if appropriate after removal of interfering amounts of water by methods known to those skilled in the art, e.g. stripping with or without use of inert gases such as

nitrogen and/or noble gases. Suitable suspension media are, for example, toluene, xylene, tetrahydrofuran, acetone, 2-methylpentanone, cyclohexanone and also polyether alcohols according to the invention and mixtures thereof. The catalyst is preferably used in a suspension in a polyol as described, for example, in EP 0 090 444 A.

Preferably the compounds of general formula (I) according to the presently claimed invention have kinematic viscosity in the range of ≥ 50 $mm^2/s$ to ≤ 1500 $mm^2/s$, more preferably in the range of ≥ 100 $mm^2/s$ to ≤ 1350 $mm^2/s$ at 40°C, determined according to ASTM D 445.

Preferably the compounds of general formula (I) according to the presently claimed invention have kinematic viscosity in the range of ≥ 20 $mm^2/s$ to ≤ 200 $mm^2/s$, more preferably in the range of ≥ 250 $mm^2/s$ to ≤ 170 $mm^2/s$, at 100 °C, determined according to ASTM D 445.

Preferably the compounds of general formula (I) according to the presently claimed invention have a pour point in the range of ≤ - 60 °C to ≤ 20 °C, more preferably in the range of ≥ - 50 °C to ≤ 15 °C, determined according to DIN ISO 3016.

Preferably the compounds of general formula (I) according to the presently claimed invention have a weight average molecular weight Mw in the range of 1,000 to 20,000 g/mol, more preferably in the range of 1200 to 18000 g/mol, determined according to DIN 55672-1.

Preferably the alkoxylated polytetrahydrofuranes as present in the compositions according to the presently claimed invention have a polydispersity in the range of 1.05 to 1.60, more preferably in the range of 1.05 to 1.55, determined according to DIN 55672-1.

Preferably $R_1$ denotes identical or different, substituted or unsubstituted, linear or branched, alkyl radical having 6 to 22 carbon atoms. More preferably $R_1$ denotes identical or different, substituted or unsubstituted, linear alkyl radical having 8 to 20 carbon atoms. Most preferably $R_1$ denotes identical or different, unsubstituted and linear alkyl radical having 8 to 15 carbon atoms.

$R_2$ denotes identical or different, substituted or unsubstituted, alkyl radical having 1 to 5 carbon atoms or hydrogen. Preferably $R_2$ denotes identical or different, substituted or unsubstituted alkyl radical having 1 to 5 carbon atoms. More preferably $R_2$ denotes identical or different, unsubstituted alkyl radical having 1 to 5 carbon atoms.

$R_3$ denotes, identical or different, hydrogen or substituted or unsubstituted alkyl having 1 to 5 carbon atoms.

Selection of a suitable surfactant in applications for different purposes is based on several factors. Foaming is one of the key factors which defines the applicability of a particular surfactant and limits them from being applied universally. Foaming characteristic of a surfactant is defined in terms of foam, which is basically a high volume fraction of gas dispersed in a liquid where the liquid is a continuous phase. In a thermodynamic sense, foams are basically unstable and are, therefore, sooner or later destroyed. The lifetime of a foam can span a remarkable range from milliseconds to very long duration.

Therefore, foaming and control of foam is an important factor in the application of surfactants. For some applications, a high foam is desired e.g. for manual dish-washing detergents, hair shampoos or detergents for manual textile washing. In these applications, foam is understood as an important measure of washing performance by the consumer who expects the product to generate voluminous and dense foam. In other cases, only a low foam is acceptable e.g. for use in textile washing machines - especially those with a horizontal axis of the drum - or dish washing machines. In these devices, the use of a high foaming detergent would lead to an overfoaming and furthermore to a decrease of the washing performance due to a damping of the mechanical action in the washing drum. A similar mechanism takes place in an industrial reactor, such as the one described hereinabove. The mechanical agitation means provided in the reactor impart the mechanical energy to the solution inside the reaction chamber, which might cause overfoaming. High foam volume may cover the substantial portion of the reaction chamber, thereby hindering the cleaning action of the surfactant. However, this does not mean that surfactants for application in an industrial reactor should have no foaming characteristic at all. Instead, an optimized foaming level is desirable. A more detailed description about foaming can be referred from pages 76 to 81 in Chemistry and Technology of Surfactants by Richard J. Farn, 2006, Blackwell Publishing.

Foam control is achieved by the addition of antifoams, which reduce the foaming tendency of the system or destroy an existing foam when added in prescribed. Such additives when added to the system incur additional cost, thereby rendering the cleaning process costly or uneconomical. Therefore, it is one of the objectives of the present invention to provide a method for cleaning a reactor in an efficient and economical manner.

Accordingly, the present invention employs a non-ionic surfactant for performing the method. Non-ionic surfactants are amphiphilic compounds, the lipophilic part of which does not dissociate into ions and hence has no charge. The non-ionics can be classified into alcohols, polyethers, esters or their combinations. Preferably, the non-ionic surfactant of the presently claimed invention is an alcohol. The alcohols have good foam stabilizing property and alkoxylation of such alcohols with suitable alkylene oxides imparts good low foaming characteristic to the resulting non-ionic surfactant. In addition to low foaming characteristics, most of the non-ionic surfactants are biodegradable in nature.

Therefore, in an embodiment of the presently claimed invention, the method of cleaning the reactor for preparing compounds of general formula (I) employs a non-ionic surfactant of general formula (II)

$R_4$-O-$(AO)_p$-(H) (II),

wherein

- p is a real number in the range of ≥ 1 to ≤ 50,
- $R_4$ denotes, identical or different, substituted or unsubstituted, linear or branched alkyl having 4 to 20 carbon atoms,
- and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure.

In a preferred embodiment, the non-ionic surfactant of general formula (II) is represented as

$R_4$-O-$(AO)_p$-(H) (II),

wherein

- p is a real number in the range of ≥ 1 to ≤ 40,
- $R_4$ denotes, identical or different, substituted or unsubstituted, linear or branched alkyl having 5 to 16 carbon atoms,
- and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure.

In another preferred embodiment, the non-ionic surfactant of general formula (II) is represented as $R_4$-O-$(AO)_p$-(H) (II), wherein

- p is a real number in the range of ≥ 1 to ≤ 30,
- $R_4$ denotes, identical or different, substituted or unsubstituted, linear or branched alkyl having 8 to 16 carbon atoms,
- and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CH_3)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure.

In another preferred embodiment, the non-ionic surfactant of general formula (II) is represented as

$R_4$-O-$(AO)_p$-(H) (II),

wherein

- p is a real number in the range of ≥ 1 to ≤ 25,
- $R_4$ denotes, identical or different, substituted or unsubstituted, linear or branched alkyl having 10 to 16 carbon atoms, and
- AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CH_3)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure.

The above formulae give a general definition of the alcohol alkoxylates. These substances are mixtures of substances of the type indicated having different chain lengths. For the indices, therefore, average values are calculated which may differ from an integer. Hence, the indices have been kept as real numbers, which takes into account such possibilities.

The non-ionic surfactant of the general formula (II) or (III) is a derivative of alkylene oxide and alcohol, hereinafter referred as alkoxylated alcohol. The alkylene oxide may be selected from a group consisting of $CH_2$-$CH_2$-O, $CH(CH_3)$-$CH_2$-O, $CH_2$-$CH(CH_3)$-O, $CH(C_2H_5)$-CH-O, $C(CH_3)_2$-$CH_2$-O, CH-$C(CH_3)_2$-O and $CH_2$-$CH(C_2H_5)$-O. More preferably, alkylene oxides are selected from the group consisting of $CH_2$-$CH_2$-O, $CH(CH_3)$-$CH_2$-O, $CH_2$-$CH(CH_3)$-O,

$C(CH_3)_2$-$CH_2$-O and CH-$C(CH_3)_2$-O. Most preferably, alkylene oxides are selected from a group consisting of $CH_2$-$CH_2$-O, $CH(CH_3)$-$CH_2$-O and $CH_2$-$CH(CH_3)$-O.

The alkoxylated alcohol is obtained by addition of alkylene oxide to alcohol at suitable temperature and pressure. The starting compounds for the preparation of the adducts are alcohols having carbon atoms ranging between $C_4$ to $C_{20}$. Preferably, the alcohols are aliphatic or aromatic alcohols having carbon atoms ranging between $C_8$ to $C_{18}$. More preferably, alcohols are aliphatic or aromatic alcohols having carbon atoms ranging between $C_8$ to $C_{16}$. Any suitable method for synthesis of such alcohols may be used such as, but not limited to, oxo process, modified oxo process, Ziegler process and other similar processes. Such processes are known to a person skilled in the art.

Suitable alcohols may be those which have the requisite number of carbon atoms and are branched or preferably linear and saturated. Preferably, alcohols may be selected from a group consisting of primary alcohols, secondary alcohols, tertiary alcohols, oxo alcohols and mixtures thereof, having carbon atoms ranging between $C_8$ to $C_{16}$. More preferably, the alcohols may be selected from a group consisting of primary alcohols, secondary alcohols and oxo alcohols, having carbon atoms ranging between $C_8$ to $C_{16}$.

In a preferred embodiment, the oxo alcohols may be selected from a group consisting of $C_9$ to $C_{15}$ oxo alcohol. Preferably, the oxo alcohols may be selected from a group consisting of $C_{13}$ to $C_{15}$ oxo alcohol. More preferably, the oxo alcohol may be a $C_{13}$ or $C_{15}$ oxo alcohol.

In another embodiment, the alcohol may be selected from a group consisting of primary alcohol, secondary alcohol and tertiary alcohol having carbon atoms ranging between $C_9$ to $C_{15}$. Preferably, the alcohol may be selected from a group consisting of primary alcohol or secondary alcohol having carbon atoms ranging between $C_9$ to $C_{15}$. However, in a preferred embodiment, the alcohol may be a primary alcohol having carbon atoms ranging between $C_9$ to $C_{12}$. Preferably, the primary alcohol may be 2-propylheptanol. Furthermore, in another preferred embodiment, the alcohol may be a secondary alcohol having carbon atoms ranging between $C_9$ to $C_{15}$. Preferably, the secondary alcohol may have carbon atoms ranging between $C_{12}$ to $C_{14}$.

Accordingly, the non-ionic surfactant of general formula (II) is represented by a general formula (III)

$$R_4\text{-O-(EO)}_x\text{-(PO)}_y\text{-(H)} \qquad \text{(III)},$$

wherein

- x is a real number in the range of ≥ 1 to ≤ 10,
- y is a real number in the range of ≥ 1 to ≤ 10,
- EO is $CH_2$-$CH_2$-O,
- PO is $CH(CH_3)$-$CH_2$-O or $CH_2$-$CH(CH_3)$-O,
- and $R_4$ denotes an unsubstituted, linear or branched alkyl having 8 to 16 carbon atoms,

whereby the concatenations denoted by x and y are distributed to form a block polymeric structure or a random polymeric structure.

In an embodiment, the alkoxylated alcohol represented as a non-ionic surfactant of general formula (II) is derived from a secondary alcohol having carbon atoms ranging between $C_{12}$ to $C_{14}$ and alkylene oxide selected from $CH_2$-$CH_2$-O and $CH_3$-CH-$CH_2$-O, to represent a non-ionic surfactant of the general formula (III)

$$R_4\text{-O-(EO)}_x\text{-(PO)}_y\text{-(H)} \qquad \text{(III)},$$

wherein

- x is a real number in the range of ≥ 1 to ≤ 10,
- y is a real number in the range of ≥ 1 to ≤ 10,
- EO is $CH_2$-$CH_2$-O,
- PO is $CH(CH_3)$-$CH_2$-O or $CH_2$-$CH(CH_3)$-O,
- and $R_4$ denotes an unsubstituted, linear or branched alkyl having 12 to 14 carbon atoms,

whereby the concatenations denoted by x and y are distributed to form a block polymeric structure.

In yet another embodiment, the alkoxylated alcohol represented as a non-ionic surfactant of general formula (II) consists of a primary alcohol having 10 carbon atoms and alkylene oxide selected from $CH_2$-$CH_2$-O and $CH_3$-CH-$CH_2$-O, to represent a non-ionic surfactant of the general formula (III)

$$R_4\text{-O-(EO)}_x\text{-(PO)}_y\text{-(H)} \qquad \text{(III)},$$

wherein

| | |
|---|---|
| x | is a real number in the range of ≥ 1 to ≤ 9, |
| y | is a real number in the range of ≥ 1 to ≤ 5, |
| EO | is $CH_2$-$CH_2$-O, |
| PO | is $CH(CH_3)$-$CH_2$-O or $CH_2$-$CH(CH_3)$-O, |
| and $R_4$ | denotes an unsubstituted, linear or branched alkyl having 10 carbon atoms, |

whereby the concatenations denoted by x and y are distributed to form a random polymeric structure.

By the term "random polymeric structure", the present compound of general formula (III) takes into consideration the random arrangement of EO and PO units as well. For instance, the general formula (III) compounds may encompass $R_4$-O-$(EO)_x$-$(PO)_y$-(H) as well as $R_4$-O-(PO)y-$(EO)_x$-(H).

In a further embodiment, the alkoxylated alcohol represented as a non-ionic surfactant of general formula (II) consists of an oxo alcohol having 13 or 15 carbon atoms and alkylene oxide selected from $CH_2$-$CH_2$-O and $CH_3$-CH-$CH_2$-O, to represent a non-ionic surfactant of the general formula (III)

$$R_4\text{-O-}(EO)_x\text{-}(PO)_y\text{-}(H) \qquad \text{(III)},$$

wherein

| | |
|---|---|
| x | is a real number in the range of ≥ 1 to ≤ 4, |
| y | is a real number in the range of ≥ 1 to ≤ 6, |
| EO | is $CH_2$-$CH_2$-O, |
| PO | is $CH(CH_3)$-$CH_2$-O or $CH_2$-$CH(CH_3)$-O, |
| and $R_4$ | denotes an unsubstituted, linear or branched alkyl having 13 or 15 carbon atoms, |

whereby the concatenations denoted by x and y are distributed to form a block polymeric structure.

Although, non-ionic surfactants, as described hereinabove may be used for cleaning the reactor, still cationic and anionic surfactants or their mixture with non-ionic surfactants may also be employed. Such cationic and anionic surfactants are known to a person skilled in the art. Nevertheless, the cationic surfactants such as, but not limited to, dialkyl-dimethylammonium halides, dialkoxy-dimethylammonium halides and imidazolinium salts with a long-chain alkyl radical may be used. Anionic surfactants such as, but not limited to, alcohol sulfates, alcohol ether sulfates, alkylbenzenesulfonates, α-olefinsulfonates and sulfosuccinates may also be used.

The steps for carrying out the method of the presently claimed invention is defined hereinbelow as an embodiment which describes the method for cleaning the reactor comprising a reaction chamber and an interior surface used for preparing a compound of general formula (I)

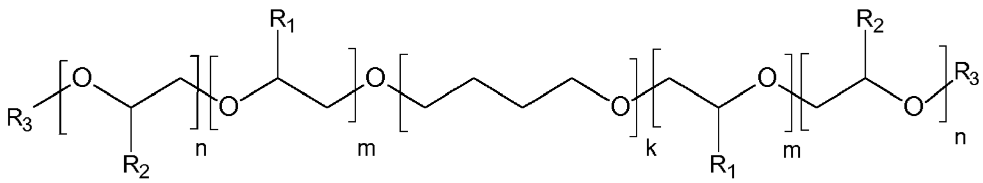

(I),

wherein

m is, identical or different, a real number in the range of ≥ 1 to ≤ 40,
n is, identical or different, a real number in the range of ≥ 5 to ≤ 50,
k is, identical or different, a real number in the range of ≥ 5 to ≤ 30,
$R_1$ denotes identical or different, substituted or unsubstituted, linear or branched, alkyl radical having 6 to 28 carbon atoms,
$R_2$ denotes, identical or different, substituted or unsubstituted alkyl radical having 1 to 5 carbon atoms or hydrogen, and
$R_3$ denotes, identical or different, hydrogen or substituted or unsubstituted alkyl having 1 to 5 carbon atoms

whereby the concatenations denoted by k, m and n are distributed to form a block polymeric structure or a random

polymeric structure,
the said method comprising at least the steps of:

c) contacting the interior surface with a solution comprising ≥1 % to ≤ 10% by weight of a non-ionic surfactant of general formula (II)

$$R_4\text{-O-(AO)}_p\text{-(H)} \qquad (II),$$

wherein

p is a real number in the range of ≥ 1 to ≤ 50,
$R_4$ denotes, identical or different, substituted or unsubstituted, linear or branched alkyl having 4 to 20 carbon atoms,
and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure,
and a pre-heated solvent,
to obtain a mixture comprising the non-ionic surfactant of general formula (II), the compound of general formula (I) and the solvent,
wherein the pre-heated solvent is at a temperature in the range of ≥ 30°C to ≤ 100°C,

In an embodiment, the presently claimed invention is directed to a method for cleaning a reactor comprising a reaction chamber and an interior surface used for preparing a compound of general formula (I)

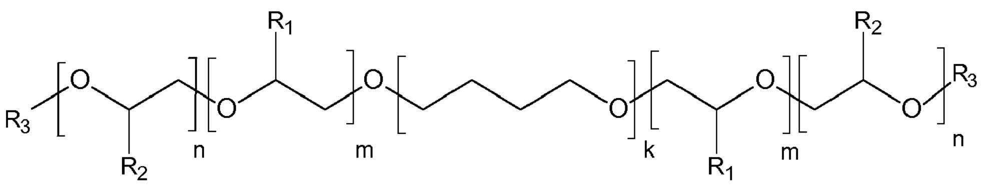

(I),

wherein

m is, identical or different, a real number in the range of ≥ 1 to ≤ 40,
n is, identical or different, a real number in the range of ≥ 5 to ≤ 50,
k is, identical or different, a real number in the range of ≥ 5 to ≤ 30,

$R_1$ denotes identical or different, substituted or unsubstituted, linear or branched, alkyl radical having 6 to 28 carbon atoms, and
$R_2$ denotes, identical or different, substituted or unsubstituted alkyl radical having 1 to 5 carbon atoms or hydrogen, and
$R_3$ denotes, identical or different, hydrogen or substituted or unsubstituted alkyl having 1 to 5 carbon atoms,

whereby the concatenations denoted by k, m and n are distributed to form a block polymeric structure or a random polymeric structure,
the said method comprising the steps of:

a) providing the reactor comprising the compound of general formula (I),
b) discharging the compound of general formula (I) from the reactor and purging with at least one gas selected from the group consisting of nitrogen, argon and helium,
c) contacting the interior surface with a solution comprising ≥ 1 % to ≤ 10% by weight of a non-ionic surfactant of general formula (II)

$$R_4\text{-O-(AO)}_p\text{-(H)} \qquad (II),$$

wherein

p is a real number in the range of ≥ 1 to ≤ 50,
$R_4$ denotes, identical or different, substituted or unsubstituted, linear or branched alkyl having 4 to 20 carbon atoms,
and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure,
and a pre-heated solvent,
to obtain a mixture comprising the non-ionic surfactant of general formula (II), the compound of general formula (I) and the solvent,
wherein the pre-heated solvent is at a temperature in the range of ≥ 30°C to ≤ 100°C,
d) stirring the mixture obtained in step c) to give a spent mixture comprising the non-ionic surfactant of general formula (II), the compound of general formula (I) and the solvent,
e) discharging the spent mixture from the reactor.

In another embodiment, the above method is characterized in that the non-ionic surfactant of general formula (II) has a general formula (III)

$$R_4\text{-O-(EO)}_x\text{-(PO)}_y\text{-(H)} \qquad \text{(III)},$$

wherein

x is a real number in the range of ≥ 1 to ≤ 10,
y is a real number in the range of ≥ 1 to ≤ 10,

EO is $CH_2$-$CH_2$-O,
PO is $CH(CH_3)$-$CH_2$-O or $CH_2$-$CH(CH_3)$-O,
and R4 denotes an unsubstituted, linear or branched alkyl having 8 to 16 carbon atoms,

whereby the concatenations denoted by x and y are distributed to form a block polymeric structure or a random polymeric structure.

In the practice of this invention, a polymerization reactor, as described hereinabove, is provided. The reactor has been used for preparing the compounds of general formula (I). Once the products are formed, they are discharged from the reaction chamber for further processing. However, due to the chemical nature of the compounds of general formula (I) a certain amount of compounds of general formula (I) sticks to the interior surface of the reactor chamber and does not simply flow out. Thereby affording the need to effectively clean the reactor chamber and remove the residues of compounds of general formula (I). This is in particular required if the reactor is used as a multi-purpose reactor in which different kinds of starting materials are subsequently polymerized to obtain polymers of different composition.

Now initial flushing of the reactor is done by means of steam. By the term "steam", it is referred to all kinds of steam such as, but not limited to, low pressure steam, moderate pressure steam and high pressure steam. The choice of a particular type of steam depends on several factors such as but not limited to the nature of the deposited material and the amount of deposition inside the reaction chamber. For instance, if the deposited material has a high adhesive strength upon cooling and has deposited largely inside the reaction chamber, it would be preferred to use a high pressure steam. Such choice of steam is known to a person of ordinary skill in the art. Moreover, the pressure range for all types of steams is well known to such a person. The initial flushing does not clean the reaction chamber completely of the deposited material. It only drains out the easily removable material.

Immediately upon initial flushing, the reactor atmosphere is made non-reactive by flushing a stream of inert gas. Preferably, the inert gas is selected from a group consisting of nitrogen, argon and helium. More preferably, the inert gas is either nitrogen or argon. In a preferred embodiment, the inert gas is nitrogen. This inert gas atmosphere confirms that there are no reactive products or by-products or unreacted raw material left in the reaction chamber, which affect the efficiency of the cleaning method. Moreover, it prevents any problems caused by introducing traces of moisture and oxygen during reactor opening.

A non-ionic surfactant represented by a compound of general formula (II) or (III) is selected, as described hereinabove. A non-ionic surfactant solution comprising ≥1% to ≤ 10% by weight of the non-ionic surfactant, related to the overall weight of the solution, and a pre-heated solvent is prepared. The low concentration of the non-ionic surfactant in the solution makes the method of the present invention comparatively economical.

Preferably, the non-ionic surfactant solution comprises ≥ 1% to ≤ 8% by weight of the non-ionic surfactant. More preferably, the solution comprises ≥ 1% to ≤ 7% by weight of the non-ionic surfactant. Most preferably, the solution comprises ≥ 1% to ≤ 6% by weight of the non-ionic surfactant. In a preferred embodiment, the solution comprises ≥ 1% to ≤ 5% by weight of the non-ionic surfactant. The weight of the non-ionic surfactant is in each case related to the overall weight of the solution. The sum of the % by weight of the non-ionic surfactant and the pre-heated solvent in the solution add up to 100%.

By the term "pre-heated", it is referred to heating the solvent prior to mixing it with the non-ionic surfactant of general formula (II) or (III). Accordingly, the solvent is heated to a temperature in the range of ≥ 30°C to ≤ 100°C. Preferably, the solvent is heated to a temperature in the range of ≥ 40°C to ≤ 95°C.

The solvent is selected from a group consisting of water, alcohol, ether and caustic. Preferably, the solvent is selected from a group consisting of water, alcohol and ether. More preferably, the solvent is selected from a group consisting of water or alcohol. Most preferably, the solvent is water.

The non-ionic surfactant solution is contacted with the interior surface of the reactor and continuously stirred. Any suitable means of stirring may be applied, as described hereinabove. Preferably, the stirring is carried out at ≥ 80 rpm to ≤ 150 rpm. More preferably, the stirring is carried out at ≥ 90 rpm to ≤ 120 rpm.
The temperature during mixing is kept in the range of ≥ 30°C to ≤ 100°C. More preferably, the temperature is maintained in the range of ≥ 40°C to ≤ 90°C.

A residence time in the range of ≥ 0.5 h to ≤ 10 h is provided to the mixture comprising the compound of general formula (I), non-ionic surfactant of general formula (II) or (III) and the solvent in the reaction chamber. Preferably, the residence time is in the range of ≥ 0.5 h to ≤ 8 h.

The residence time provided during the stirring ensures that the reactor is cleaned of all the deposition and/or agglomeration, thereby producing the spent mixture. Thus, the spent mixture comprises the non-ionic surfactant of formula (II) and/or formula (III), the compound of general formula (I) and the solvent as well as further agglomeration products and impurities that preferably result from the preparation of compounds of general formula (I). A sample of the spent mixture is checked for the effectiveness of the cleaning. By the term "effectiveness", it is referred to an estimate of whether the cleaning method has cleaned the reactor of the deposited or agglomerated material. A crude manner of determining the effectiveness of the cleaning methodology is by measuring the Total Organic Carbon value. The Total Organic Carbon (TOC) is defined as the amount of organic compound present in an aqueous solution. As used herein the TOC is the total weight of the carbon atoms of the organic compounds in a solution per weight of that solution. The TOC value is measured using an Elementar vario EL cube.

In order to comment on the effectiveness and efficiency of the cleaning methodology, it is necessary to measure a reference TOC value or the TOC blank value. By the term "TOC blank value", it is referred to the TOC value of the non-ionic surfactant solution. The TOC blank value of the non-ionic surfactant solution is the reference value which is used to compare with the TOC value of the spent mixture and thus gives a preliminary estimate of the efficiency of the cleaning methodology. The TOC blank value of the non-ionic surfactant solution is measured every time the concentration of the non-ionic surfactant in the solution is changed.

The spent mixture sample is measured for its TOC value, compared with the TOC blank value of the non-ionic surfactant solution and the difference between the two is noted. In an embodiment, the difference between the TOC value of the spent mixture and TOC blank value of the non-ionic surfactant solution is in the range of ≥ 0% to ≤ 35%. In case, the difference of TOC values is higher than the above range, a fresh non-ionic surfactant solution is added to the spent mixture. Once again the stirring and residence time is provided to the mixture and the sample is checked for its TOC value. The difference of the TOC values is measured again and this method is repeated until the difference between the TOC value of the spent mixture and TOC blank value of the non-ionic surfactant solution is in the range of ≥ 0% to ≤ 35%.

The number of repetitions of the step of adding the non-ionic surfactant solution into the reaction chamber based on the difference in the TOC values, as described hereinabove, ensures that the reactor only contains the non-ionic surfactant solution and not the deposited and/or agglomerated material. The reaction chamber comprising non-ionic surfactant solution, as reflected by the difference value, may be easily flushed out of the reactor by any possible means known to a person skilled in the art. Therefore, it is desirable to have the difference as low as possible. Preferably, the TOC value of the spent mixture is desired to be closer to the TOC blank value of the non-ionic surfactant solution.

For visual determination of the cleaning efficiency, a dye is added in the reaction chamber prior to initial flushing of the reactor. Any suitable dye may be selected for this purpose, such as but not limited to acid orange, Congo red, disperse orange, methyl orange, Sudan red and Trypan blue. Preferably, the dye is selected from a group consisting of Congo red, disperse orange, methyl orange and Sudan red. More preferably, the dye is selected from the group consisting of Congo red, disperse orange and Sudan red. Most preferably, the dye is selected from Congo red and Sudan red.

The scales deposited on the interior of a polymerization reactor, particularly, those scales deposited on the interior surface, an agitator, and baffle-plates of the reaction chamber during polymerization can be completely removed. Thus, the method provides for an efficient and effective cleaning of the reactor.

The cleaning method according to the presently claimed invention has several advantages over conventional cleaning methods, e.g.:

- use of non-ionic surfactants of general formula (II) and/or (III) in low amounts to effectively clean the polymerization reactor and/or
- use of non-ionic surfactants of general formula (II) and/or (III) with low foaming properties and/or
- reduction of downtime of a polymerization reactor, in particular a multi-purpose polymerization reactor, due to use of non-ionic surfactants of general formula (II) and/or (III) with high cleaning efficiency.

## Examples

## Compounds

Plurafac® LF901 (alkoxylated 2-propylheptanol (4.7 PO and 8 EO), based low-foaming non-ionic surfactant,) and,
Plurafac® LF403 (alkoxylated $C_{13}/_{15}$ oxo alcohol (4.8 PO and 2.3 EO), low-foaming non-ionic surfactant) are available from BASF SE.
Ambosol® (magnesium silicate) is available from PQ Corporation.
Sudan red is available from Sigma-Aldrich.

OHZ = hydroxyl number, determined according to DIN 53240.
Mw = weight average molecular weight, determined according to DIN 55672-1 and referred to polystyrene calibration standard.

## Method for determining TOC value

The total organic carbon (TOC) value of the spent mixture as well as the surfactant solution was determined according to the following method:

1. Content of carbon

Method: After combustion of the test item in a helium atmosphere with added oxygen, carbon was determined as $CO_2$ using thermal conductivity detection.

| | |
|---|---|
| Apparatus: | Analyzer: Vario EL cube (Elementar) |
| | Analytical balance: MT5 (Mettler-Toledo) |
| Reagents: | Reaction gas: oxygen |
| | Carrier gas: helium |
| | Combustion catalyst: CuO |
| | Reduction catalyst: Cu |

Sample preparation: About 1 - 5 mg of the test item were weighed each into a tin capsule under standard atmosphere and placed into the apparatus.

| | |
|---|---|
| Test parameters: | Combustion temperature: approx. 1100 °C |
| | Reduction temperature: approx. 700 °C |
| | Evaluation: external calibration |

2. Content of inorganic carbon

Method: After acidification of the test item, the resulting $CO_2$ was stripped off and measured with NDIR detection.

| | |
|---|---|
| Apparatus: | IR detection unit (for determination of $CO_2$) (Dimatec) |
| | Analytical balance: Mettler-Toledo |

(continued)

| | |
|---|---|
| | Common glassware |
| Reagents: | Nitrogen as carrier / reaction gas |
| | Deionized water |
| | Gelatine capsules |
| | Orthophosphoric acid ca. 36 % in water |
| | Potassium hydroxide solution ca. 30 % in water |
| Reagents for purification: | $H_2SO_4$ conc. |
| | $KMnO_4$ solution 5 % in water |
| | Hydroxylamine hydrochloride solution 2 % in water $AgNO_3$ solution 40 % in water |
| | $Mg(ClO_4)_2$ |
| | $MnO_2$ |
| | Sicapent |

Sample preparation: About 30 - 50 mg of the test item were weighed to the nearest 0.01 mg under standard atmosphere into a gelatine capsule. Subsequently, the capsule was transferred into the TIC apparatus, which was previously charged with phosphoric acid. The mixture was heated to approx. 50-60 °C. The $CO_2$ generated upon acidification of the test item was stripped off using a stream of nitrogen, was purified and measured by NDIR detection.

3. TOC content

TOC is calculated by subtraction of the IC value from the TC of the sample.

**Synthesis of polyalkylene glycol**

In order to synthesize the polyalkylene glycol (PAG), a steel reactor was loaded with a polytetrahydrofurane having Mw in the range of 1000 to 3000 gm/mol, and KOtBu was mixed and the reactor was purged with nitrogen. $C_2$ to $C_7$ alkylene oxide and $C_8$ to $C_{30}$ epoxide were mixed at 140°C and under pressure ranging between 5 to 7 bar. The reactor was stirred at 140°C and cooled to 80°C followed by nitrogen stripping to obtain the PAG. The product was discharged and mixed with Ambosol® in a rotary evaporator. The purified product was obtained by filtration in a pressure strainer (Filtrations media: Seitz 900).

**Cleaning of polymerization reactor**

A laboratory reactor having a capacity of 2.25 L was taken. 800 mL of PAG was introduced into the reaction chamber. 0.12 g of Sudan red dye was mixed with in the reaction chamber and stirred at 100 rpm. The reactor temperature was maintained at 80°C. Initial flushing was performed by means of steam and the reaction chamber was drained. The reaction chamber atmosphere was made non-reactive by passing a stream of nitrogen gas.

A solution of non-ionic surfactant Plurafac® LF901 with 200 mL of water was prepared having different amounts of the surfactant, as shown in Table 1. Similarly, another surfactant solution was also prepared but with a different non-ionic surfactant, Plurafac® LF403. The solution was added in the reaction chamber and stirred at 100 rpm. The reaction chamber was maintained at a temperature of 80°C. A residence time of 30 min was provided to give a spent mixture. The spent mixture was tested for its TOC value, thereby determining the cleaning efficiency. This method was repeated three times with each time the sample being tested for its TOC value and compared with TOC blank value of the surfactant.

Similarly, several examples were conducted with the PAG using different surfactants Plurafac® LF901 and Plurafac® LF403, the results of which are reported in Table 1.

**Table 1**

| Example | Spent mixture TOC value (g/100 g) | Residual TOC value (g/100 g) | Balance absolute XPB (g) | Surfactant | Surfactant conc. (%) |
|---|---|---|---|---|---|
| **Example 1** | | | | | |
| 1st discharge | 3.1 | 2.5 | 5 | LF901 | 1.0 |
| 2nd discharge | 2.4 | 1.8 | 3.6 | LF901 | 1.0 |

(continued)

| Example | Spent mixture TOC value (g/100 g) | Residual TOC value (g/100 g) | Balance absolute XPB (g) | Surfactant | Surfactant conc. (%) |
|---|---|---|---|---|---|
| **Example 1** | | | | | |
| 3rd discharge | 0.8 | 0.2 | 0.4 | LF901 | 1.0 |
| Blank value (surfactant solution) | 0.6 | -- | 9.0 | LF901 | 1.0 |
| **Example 2** | | | | | |
| 1st discharge | 4.0 | 1.1 | 2.2 | LF901 | 5.0 |
| 2nd discharge | 3.6 | 0.7 | 1.4 | LF901 | 5.0 |
| 3rd discharge | 3.4 | 0.5 | 1.0 | LF901 | 5.0 |
| Blank value (surfactant solution) | 2.9 | -- | 4.6 | LF901 | 5.0 |
| **Example 3** | | | | | |
| 1st discharge | 4.6 | 1.6 | 3.2 | LF403 | 5.0 |
| 2nd discharge | 3.7 | 0.7 | 1.4 | LF403 | 5.0 |
| 3rd discharge | 3.2 | 0.2 | 0.4 | LF403 | 5.0 |
| Blank value (surfactant solution) | 3.0 | -- | 5.0 | LF403 | 5.0 |
| **Example 4** | | | | | |
| 1st discharge | 2.4 | 1.1 | 2.2 | LF403 | 2.0 |
| 2nd discharge | 1.4 | 0.1 | 0.2 | LF403 | 2.0 |
| 3rd discharge | 1.2 | 0.0 | 0.0 | LF403 | 2.0 |
| Blank value (surfactant solution) | 1.2 | -- | 2.4 | LF403 | 2.0 |

The TOC difference may be calculated using the below formula:

$$\text{TOC difference,\%} = \frac{\text{residual TOC value}}{\text{spent mixture TOC value}} \times 100\%$$

Based on the TOC difference values, the number of repetition steps may be decided, such as once, twice or thrice and hence, the efficiency and effectiveness of the cleaning methodology may be determined.

The examples further disclose that the spent mixture TOC value obtained after the third discharge is very close to the TOC blank value of the surfactant solution. In fact, the difference in spent mixture TOC value and TOC blank value of the surfactant solution, as reported under column "Residual TOC value (g/100 g)", is negligible or zero for some examples.

It may be further concluded that high concentration of surfactant in the solution do not result in efficient cleaning of the reactant. Accordingly, in order to achieve efficient cleaning of the reactor, the surfactant concentration should be kept within the range disclosed in the present invention, thereby rendering the method economical.

## Claims

**1.** A method for cleaning a reactor comprising a reaction chamber and an interior surface used for preparing a compound

of general formula (I)

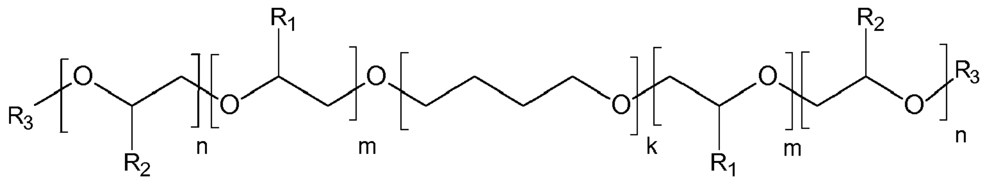

(I),

wherein

m is, identical or different, a real number in the range of ≥ 1 to ≤ 40,
n is, identical or different, a real number in the range of ≥ 5 to ≤ 50,
k is, identical or different, a real number in the range of ≥ 5 to ≤ 30,
$R_1$ denotes, identical or different, substituted or unsubstituted, linear or branched, alkyl radical having 6 to 28 carbon atoms,
$R_2$ denotes, identical or different, substituted or unsubstituted alkyl radical having 1 to 5 carbon atoms or hydrogen,
and $R_3$ denotes, identical or different, hydrogen or substituted or unsubstituted alkyl having 1 to 5 carbon atoms,

whereby the concatenations denoted by k, m and n are distributed to form a block polymeric structure or a random polymeric structure,
the said method comprising at least the steps of:

c) contacting the interior surface with a solution comprising ≥1 % to ≤ 10% by weight of a non-ionic surfactant of general formula (II)

$$R_4\text{-O-(AO)}_p\text{-(H)} \qquad \text{(II)},$$

wherein

p is a real number in the range of ≥ 1 to ≤ 50,
$R_4$ denotes, identical or different, substituted or unsubstituted, linear or branched alkyl having 4 to 20 carbon atoms,
and AO denotes, identical or different, alkylene oxide radicals selected from the group consisting of $CH_2$-$CH_2$-O, $CH(CH_3)$-$CH_2$-O, $CH_2$-$CH(CH_3)$-O, $CH(C_2H_5)$-CH-O, $C(CHs)_2$-$CH_2$-O, CH-$C(CH_3)_2$-O and $CH_2$-$CH(C_2H_5)$-O,

whereby the concatenation denoted by p is distributed to form a block polymeric structure or a random polymeric structure,
and a pre-heated solvent,
to obtain a mixture comprising the non-ionic surfactant of general formula (II), the compound of general formula (I) and the solvent,
wherein the pre-heated solvent is at a temperature in the range of ≥ 30°C to ≤ 100°C.

**2.** The method according to claim 1 further comprising the steps of:

a) providing the reactor comprising the compound of general formula (I),
b) discharging the compound of general formula (I) from the reactor and purging with at least one gas selected from the group consisting of nitrogen, argon and helium,
d) stirring the mixture obtained in step c) to give a spent mixture comprising the non-ionic surfactant of general formula (II), the compound of general formula (I) and the solvent,
e) discharging the spent mixture from the reactor.

**3.** The method according to claim 1 or 2, **characterized in that** the reactor is an oligomerization reactor or polymerization reactor.

4. The method according to one or more of claims 1 to 3, **characterized in that** the compound of general formula (I) has a weight average molecular weight $M_w$ in the range of 1,000 to 20,000 g/mol determined according to DIN 55672-1.

5. The method according to one or more of claims 1 to 4, **characterized in that** the non-ionic surfactant (II) has a general formula (III)

$$R_4\text{-O-(EO)}_x\text{-(PO)}_y\text{-(H)} \qquad \text{(III)},$$

wherein

x is a real number in the range of ≥ 1 to ≤ 10,
y is a real number in the range of ≥ 1 to ≤ 10,
EO is $CH_2$-$CH_2$-O,
PO is $CH(CH_3)$-$CH_2$-O or $CH_2$-$CH(CH_3)$-O,
and $R_4$ denotes an unsubstituted, linear or branched alkyl having 8 to 16 carbon atoms,

whereby the concatenations denoted by x and y are distributed to form a block polymeric structure or a random polymeric structure.

6. The method according to one or more of claims 1 to 5, **characterized in that** the solvent is selected from a group consisting of water, alcohol, ether and caustic.

7. The method according to one or more of claims 1 to 6, **characterized in that** the solvent is water.

8. The method according to one or more of claims 1 to 7, **characterized in that** the solution comprises ≥ 1% to ≤ 5% by weight of a non-ionic surfactant of general formula (II) or general formula (III).

9. The method according to one or more of claims 1 to 8, **characterized in that** the solution of step c) is provided with a residence time in the range of 0.5 h to 10 h in the reactor.

10. The method according to one or more of claims 1 to 9, **characterized in that** the temperature in step d) is in the range of ≥ 30°C to ≤ 100°C.

11. The method according to one or more of claims 1 to 10, **characterized in that** the stirring in step d) is carried out at ≥ 80 rpm to ≤ 150 rpm.

12. The method according to one or more of claims 1 to 11, **characterized in that** the steps c) to step e) are repeated until the difference between the total organic carbon (TOC) of the spent mixture and the total organic carbon (TOC) blank value of the non-ionic surfactant solution is in the range of ≥ 0% to ≤ 35%.

Europäisches Patentamt
European Patent Office
Office européen des brevets

# EUROPEAN SEARCH REPORT

Application Number
EP 17 15 2777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 609 693 A (DOBREZ JOHN F ET AL) 11 March 1997 (1997-03-11) * claims; examples * | 1-12 | INV. C11D1/72 B08B3/08 B08B9/08 C08F2/00 C11D11/00 |
| A | US 4 038 473 A (COHEN LOUIS) 26 July 1977 (1977-07-26) * column 4, line 11 - line 31; claims * | 1-12 | |
| A,D | US 4 904 309 A (KOMABASHIRI TAKAMICHI ET AL) 27 February 1990 (1990-02-27) * column 2, line 24 - line 45; claims * | 1-12 | |
| A | EP 3 085 757 A1 (BASF SE) 26 October 2016 (2016-10-26) * claims * | 1-12 | |

TECHNICAL FIELDS SEARCHED (IPC)

C11D
B08B
C08F

The present search report has been drawn up for all claims

1

| Place of search | Date of completion of the search | Examiner |
|---|---|---|
| Munich | 13 June 2017 | Hillebrecht, Dieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 15 2777

This annex lists the patent family members relating to the patent documents cited in the above-mentioned European search report. The members are as contained in the European Patent Office EDP file on The European Patent Office is in no way liable for these particulars which are merely given for the purpose of information.

13-06-2017

| Patent document cited in search report | | Publication date | Patent family member(s) | Publication date |
|---|---|---|---|---|
| US 5609693 | A | 11-03-1997 | NONE | |
| US 4038473 | A | 26-07-1977 | NONE | |
| US 4904309 | A | 27-02-1990 | NONE | |
| EP 3085757 | A1 | 26-10-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4904309 A
- WO 2012072178 A
- US 4345949 A
- WO 2014184062 A1
- WO 2014139935 A1
- EP 0090444 A


### Non-patent literature cited in the description


- **RICHARD J. FARN.** Chemistry and Technology of Surfactants. Blackwell Publishing, 2006, 76-81